(19) Europäisches Patentamt
European Patent Office
Office européen des brevets

(11) Veröffentlichungsnummer: **0 230 210 B1**

# (12) EUROPÄISCHE PATENTSCHRIFT

(45) Veröffentlichungstag der Patentschrift: **13.12.89**

(51) Int. Cl.⁴: **C09B 62/085,** D06P 1/382

(21) Anmeldenummer: **86810599.0**

(22) Anmeldetag: **17.12.86**

(54) **Reaktivfarbstoffe, deren Herstellung und Verwendung.**

(30) Priorität: **23.12.85 CH 5515/85**

(43) Veröffentlichungstag der Anmeldung: **29.07.87 Patentblatt 87/31**

(45) Bekanntmachung des Hinweises auf die Patenterteilung: **13.12.89 Patentblatt 89/50**

(84) Benannte Vertragsstaaten: **BE CH DE ES FR GB IT LI NL SE**

(56) Entgegenhaltungen: **FR-A- 2 436 166**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel(CH)**

(72) Erfinder: **Begrich, Rainer, Dr., Habsburgerstrasse 32, CH-4310 Rheinfelden(CH)**

EP 0 230 210 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Reaktivfarbstoffe werden in grossem Umfange für das Färben und Bedrucken von textilen Fasermaterialien eingesetzt. Obwohl heute eine grosse Anzahl von brauchbaren Reaktivfarbstoffen mit unterschiedlichen Eigenschaften und für verschiedene Anwendungsbereiche zur Verfügung steht, kann der erreichte technische Stand, angesichts der hohen Anforderungen in Bezug auf Eignung für bestimmte Färbeverfahren und Echtheitsniveau der Färbungen vielfach nicht voll befriedigen.

Das gilt auch für Reaktivfarbstoffe im Druck. Das vorhandene Angebot an qualitativ hochwertigen Druckfarbstoffen ist, besonders unter Berücksichtigung der Nuance, allgemein noch lückenhaft. Die Bereitstellung weiterer verbesserter Reaktivfarbstoffe ist daher drigend erwünscht.

Der vorliegenden Erfindung lag die Aufgabe zugrunde, neue Reaktivfarbstoffe zu finden, die besonders für das Druckverfahren geeignet sind. Die Farbstoffe sollten einen hohen Fixiergrad und zugleich eine gute Auswaschbarkeit der nichtfixierten Anteile haben, ferner allgemein gute Echtheiten und insbesondere Nuancen im Bereich gelb bis rotstichig gelb besitzen. Es hat sich gezeigt, dass die weiter unten definierten neuen Farbstoffe die gestellte Aufgabe weitgehend erfüllen.

Gegenstand der Erfindung sind Reaktivfarbstoffe der Formel

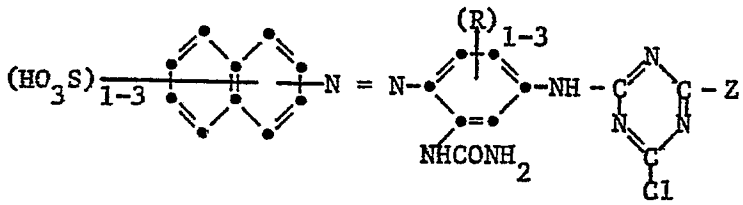

(1) ,

worin R für 1 bis 3 Substituenten aus der Gruppe Wasserstoff, Halogen, Nitro, Cyan, Trifluormethyl, Sulfamoyl, Carbamoyl, $C_{1-4}$-Alkyl, $C_{1-4}$-Alkoxy, Amino, Acetylamino, Ureido, Hydroxy, Carboxy, Sulfomethyl und Sulfo unabhängig voneinander, steht; und Z Morpholino, Piperidino oder Piperazino ist.

Für R kommen in Betracht, als Halogen: Fluor, Chlor und Brom; als $C_{1-4}$-Alkyl: Methyl, Aethyl, Propyl, Isopropyl, Butyl, Isobutyl, sek.-Butyl und tert.-Butyl; und als $C_{1-4}$-Alkoxy: Methoxy, Aethoxy, Propyloxy, Isopropyloxy, Butyloxy, Isobutyloxy, sek.-Butyloxy und tert.-Butyloxy.

Bevorzugt sind:

a) Reaktivfarbstoffe der Formel (1), worin der Naphthalinrest ein Dioder Trisulfonaphthyl-(2)-rest ist;
b) Reaktivfarbstoffe der Formel

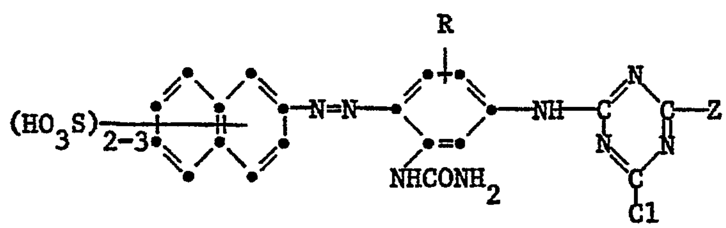

(2)

worin R Wasserstoff, Halogen, Trifluormethyl, $C_{1-4}$-Alkyl, $C_{1-4}$-Alkoxy, Carboxy oder Sulfo; und Z Morpholino, Piperidino oder Piperazino ist;

c) Reaktivfarbstoffe gemäss b), worin R Wasserstoff, Halogen, $C_{1-4}$-Alkyl oder $C_{1-4}$-Alkoxy ist;

d) Reaktivfarbstoffe gemäss c), worin R Wasserstoff ist, so dass der Benzolrest ausser der Ureidogruppe keine weiteren Substituenten enthält;

e) Reaktivfarbstoffe gemäss d), worin der Rest Z ein Morpholinorest ist.

Bevorzugt ist insbesondere der Reaktivfarbstoff der Formel

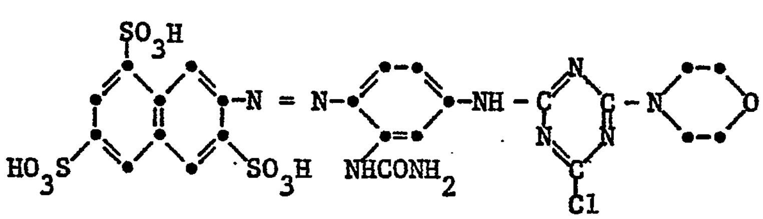

(3).

Die Farbstoffe der Formeln (1), (2) und (3) sind faserreaktiv, da sie im s-Triazinrest ein abspaltbares

Chloratom enthalten. Unter faserreaktiven Verbindungen sind solche zu verstehen, die mit den Hydroxygruppen der Cellulose, den Amino-, Carboxy-, Hydroxy- und Thiolgruppen bei Wolle und Seide, oder mit den Amino- und eventuell Carboxygruppen von synthetischen Polyamiden unter Bildung kovalenter chemischer Bindungen zu reagieren vermögen.

Das Verfahren zur Herstellung der Reaktivfarbstoffe der Formel (1) ist dadurch gekennzeichnet, dass man in beliebiger Folge eine diazotierte Diazokomponente der Formel

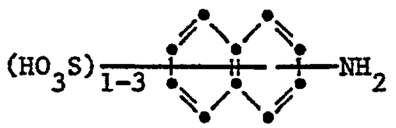 (4) ,

auf eine Kupplungskomponente der Formel

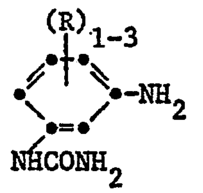 (5) ,

kuppelt und die so erhaltene Aminomonoazo-Verbindung und ein Amin der Formel

$$H - Z \qquad (6)$$

mit 2,4,6-Trichlor-s-triazin kondensiert.

Da die Kondensationen in unterschiedlicher Reihenfolge ausgeführt werden können, sind zwei Verfahrensvarianten möglich.

Die beiden Verfahrensvarianten sind dadurch gekennzeichnet, dass man

1. eine diazotierte Diazokomponente der Formel (4) mit einer Kupplungskomponente der Formel (5) kuppelt, die erhaltene AminomonoazoVerbindung mit 2,4,6-Trichlor-s-triazin kondensiert und das primäre Kondensationsprodukt mit einem Amin der Formel (6) kondensiert.
2. 2,4,6-Trichlor-s-triazin zuerst mit einem Amin der Formel (6) kondensiert und das erhaltene primäre Kondensationsprodukt mit der wie in 1. hergestellten Aminomonoazo-Verbindung kondensiert.

Die bevorzugte Herstellungsweise des Reaktivfarbstoffes der Formel (3) ist dadurch gekennzeichnet, dass man nach 1. eine Monoazoverbindung der Formel

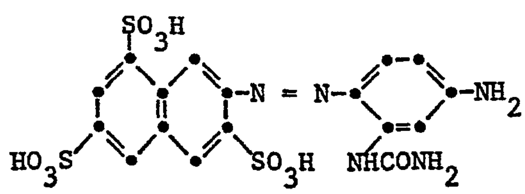 (7)

herstellt, diese mit 2,4,6-Trichlor-s-triazin kondensiert, und die erhaltene Dichlortriazin-Azoverbindung der Formel

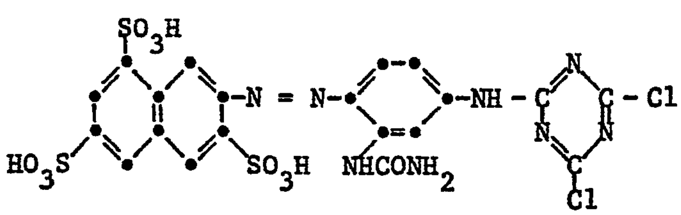 (8)

mit Morpholin kondensiert.

Als Ausgangsverbindungen zur Herstellung der Reaktivfarbstoffe der Formel (1) können beispielsweise die folgenden genannt werden:

(a) Diazokomponenten der Formel (4):
1-Naphthylamin-2-, -3-, -4-, -5-, -6-, -7- und -8-sulfonsäure, 2-Naphthylamin-1-, -3-, -4-, -5-, -6-, -7- und -8-sulfonsäure, 1-Naphthylamin-2,4-, -2,5-, -2,7-, -2,8-, -3,5-, -3,6-, -3,7-, -3,8-, -4,6-, -4,7-, -

4,8- und -5,8-disulfonsäure, 2-Naphthylamin-1,5-, -1,6-, -1,7-, -3,6-, -3,7-, -4,7-, -4,8-, -5,7- und -6,8-disulfonsäure, 1-Naphthylamin-2,4,6-, -2,4,7-, -2,5,7-, -3,5,7-, -3,6,8- und -4,6,8-trisulfonsäure, 2-Naphthylamin-1,3,7-, -1,5,7-, -3,5,7-, -3,6,7-, -3,6,8- und -4,6,8-trisulfonsäure.

(b) Kupplungskomponenten der Formel (5):
3-Aminophenylharnstoff, 1-Amino-3-ureido-6-methylbenzol, 1-Amino-3-ureido-6-methoxybenzol, 1-Amino-3-ureido-6-äthoxybenzol, 1-Amino-3-ureido-6-äthylbenzol, 1-Amino-3-ureido-6-chlorbenzol, 1-Amino-3-ureido-6-trifluormethylbenzol und 1-Amino-3-ureido-6-sulfobenzol.

(c) 2,4,6-Trichlor-s-triazin (Cyanurchlorid).

(d) Amin der Formel (6):
Morpholin, Piperidin und Piperazin.

Die Diazotierung der Diazokomponenten erfolgt in der Regel durch Einwirkung salpetriger Säure in wässrig-mineralsaurer Lösung bei tiefer Temperatur, die Kupplung auf die Kupplungskomponenten bei schwach sauren, neutralen bis schwach alkalischen pH-Werten.

Die Kondensationen des 2,4,6-Trichlor-s-triazins mit den Aminomonoazoverbindungen und den Aminoverbindungen der Formel (6) erfolgen vorzugsweise in wässriger Lösung oder Suspension, bei niedriger Temperatur und bei schwach saurem, neutralem bis schwach alkalischem pH-Wert, so dass im fertigen Reaktivfarbstoff der Formel (1) noch mindestens ein Chloratom als abspaltbarer Rest übrig bleibt. Vorteilhaft wird der bei der Kondensation freiwerdende Chlorwasserstoff laufend durch Zugabe wässriger Alkalihydroxide, -carbonate oder -bicarbonate neutralisiert. Auf eine Isolierung der Dichlortriazin-Azoverbindung wird im allgemeinen verzichtet.

Die Reaktivfarbstoffe der Formel (1) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z.B. nach Zugabe eines Gemisches gleicher Teile Mono- und Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemässen trockenen Präparate direkt, d.h. ohne Zwischenisolierung der Farbstoffe herstellen.

Die Reaktivfarbstoffe der Formel (1) sind neu. Sie zeichnen sich durch hohe Reaktivität aus, und sie ergeben Färbungen mit guten Nass- und Lichtechtheiten. Besonders hervorzuheben ist es, dass die Farbstoffe eine gute Löslichkeit und hohe Farbstoff-Fixierung aufweisen, dass sie gut in der Cellulosefaser diffundieren, und dass sich die nichtfixierten Anteile leicht entfernen lassen.

Die Reaktivfarbstoffe der Formel (1) eignen sich zum Färben und Bedrucken der verschiedensten Materialien, wie Seide, Leder, Wolle, Polyamidfasern und Polyurethanen, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Fouolardfärbeverfahren, wonach die Ware mit wässrigen und gegebenenfalls auch salzhaltigen Farbstofflösungen imprägniert wird, und die Farbstoffe nach einer Alkalibehandlung oder in Gegenwart won Alkali, gegebenenfalls unter Wärmeeinwirkung fixiert werden.

Sie eignen sich vor allem zum Druck, insbesondere auf Baumwolle, ebenso aber auch zum Bedrucken von stickstoffhaltigen Fasern, z.B. von Wolle, Seide oder Wolle enthaltenden Mischgeweben.

Es empfiehlt sich, die Färbungen und Drucke einem gründlichen Spülen mit kaltem und heissem Wasser, gegebenenfalls unter Zusatz eines dispergierend wirkenden und die Diffusion der nichtfixierten Anteile fördernden Mittel zu unterwerfen.

Bei der Anwendung in der Praxis werden die erfindungsgemässen Farbstoffe vorteilhaft als flüssige Färbe- oder Druckpräparate eingesetzt.

Aus der FR-A 2 436 166 sind ähnliche Farbstoffe bekannt, die jedoch nicht alle vorteilhaften Eigenschaften der erfindungsgemäßen Farbstoffe aufweisen.

Die Herstellung der Monoazozwischenverbindungen ist in den nachfolgenden Ausführungsbeispielen nicht in allen Fällen beschrieben, sie ergibt sich jedoch ohne weiteres aus dem oben Gesagten.

In den nachfolgenden Beispielen bedeuten die Teile Gewichtsteile.

Beispiel 1

585 Teile 7-[4-(4,6-Dichlor-1,3,5-triazin-2-yl-amino)-2-ureidophenyl-azo]-1,3,6-naphthalin-trisulfosäure, hergestellt nach bekanntem Verfahren, werden in 5000 Teilen Wasser bei 8°C und pH 4,5 durch Zugabe von Natriumhydroxidlösung gelöst. Eine Mischung von 114 Teilen Morpholin mit 70 Teilen Wasser wird so zugetropft, dass der pH nicht über 7,5 steigt. Die Temperatur steigt dabei auf etwa 20°C. Danach wird für 2 Stunden auf etwa 40°C erwärmt, wobei der pH durch Zugabe von 195 Teilen Natriumhydroxidlösung à 5n konstant gehalten wird. Der gelöste Farbstoff der Formel

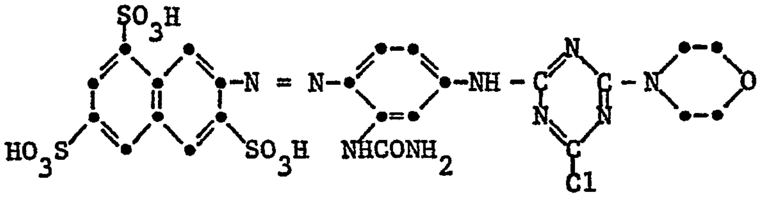 (3)

wird durch Zugabe von 550 Teilen Natriumchlorid ausgefällt und isoliert.

Man erhält - nach üblichem Verfahren auf Baumwolle appliziert - sehr echte goldgelbe Drucke oder Färbungen.

Beispiel 2

Zu einer Suspension von 184 Teilen Cyanurchlorid in 1000 Volumteilen Wasser werden bei 0 bis 5°C 96 Teile Morpholin so zugetropft, dass der pH-Wert bei 5,0 gehalten wird. Danach wird der pH-Wert weiter durch Zugabe von 100 Volumteilen 10n-Natronlauge auf 5,0 bis 5,5 gehalten. Inzwischen werden 546 Teile 7-(4-Amino-2-ureidophenyl-azo)-naphthalin-1,3,6-trisulfonsäure, hergestellt nach bekanntem Verfahren, in 4000 Volumteilen Wasser neutral gelöst. Diese Lösung wird zu der Lösung des oben hergestellten Kondensationsproduktes zulaufen gelassen. Die Reaktionsmischung wird nun für 2 bis 3 Stunden auf 40 bis 45°C erwärmt, und gleichzeitig wird der pH-Wert durch Zutropfen von 110 Volumteilen 10n-Natronlauge auf 7,5 gehalten. Aus der so entstandenen Farbstofflösung lässt sich durch Zugabe von 500 Teilen Natriumchlorid der gleiche Farbstoff isolieren, der in Beispiel 1 erhalten wird.

Wenn man nach den Angaben von Beispiel 1 oder 2 verfährt, jedoch anstelle des dort verwendeten Aminoazofarbstoffs äquivalente Mengen der in der folgenden Tabelle aufgeführten Aminoazofarbstoffe, und für den Austausch des zweiten Chloratoms am Triazinring die in der letzten Spalte angegebenen Amine verwendet, so erhält man gleichfalls wertvolle Farbstoffe, die Baumwolle in gelben bis rotstichig gelben Tönen färben.

Tabelle

| Nr. | Aminoazoverbindung aus Diazokomponente | Kupplungskomponente | Amin |
|---|---|---|---|
| 3 | 2-Aminonaphthalin-5,7-disulfosäure | 1-Amino-3-ureido-6-methyl-benzol | Morpholin |
| 4 | 2-Aminonaphthalin-3,6,8-trisulfosäure | 1-Amino-3-ureido-6-chlor-benzol | Morpholin |
| 5 | 2-Aminonaphthalin-1,5,7-trisulfosäure | 1-Amino-3-ureido-6-methyl-benzol | Morpholin |
| 6 | 2-Aminonaphthalin-5,7-disulfosäure | 1-Amino-3-ureido-benzol | Piperidin |
| 7 | 1-Aminonaphthalin-3,6,8-trisulfosäure | 1-Amino-3-ureido-6-ethoxy-benzol | Morpholin |
| 8 | 2-Aminonaphthalin-4,6,8-trisulfosäure | 1-Amino-3-ureido-6-ethoxy-benzol | Piperidin |
| 9 | 2-Aminonaphthalin-5,7-disulfosäure | 1-Amino-3-ureido-benzol | Piperazin |
| 10 | 1-Aminonaphthalin-3,6,8-trisulfosäure | 1-Amino-3-ureido-6-ethyl-benzol | Morpholin |
| 11 | 1-Aminonaphthalin-3,6-disulfosäure | 1-Amino-3-ureido-6-chlor-benzol | Morpholin |
| 12 | 2-Aminonaphthalin-1,5,7-trisulfosäure | 1-Amino-3-ureido-6-ethoxy-benzol | Piperidin |
| 13 | 2-Aminonaphthalin-4,8-disulfosäure | 1-Amino-3-ureido-6-ethyl-benzol | Morpholin |
| 14 | 2-Aminonaphthalin-4,8-disulfosäure | 1-Amino-3-ureido-6-sulfo-benzol | Morpholin |
| 15 | 2-Aminonaphthalin-3,6,8-trisulfosäure | 1-Amino-3-ureido-6-methoxy-benzol | Piperidin |
| 16 | 2-Aminonaphthalin-4,8-disulfosäure | 1-Amino-3-ureido-benzol | Piperidin |
| 17 | 2-Aminonaphthalin-1,5,7-trisulfosäure | 1-Amino-3-ureido-6-methoxy-benzol | Piperidin |
| 18 | 2-Aminonaphthalin-4,6,8-trisulfosäure | 1-Amino-3-ureido-benzol | Piperidin |
| 19 | 2-Aminonaphthalin-5,7-disulfosäure | 1-Amino-3-ureido-6-trifluormethyl-benzol | Morpholin |
| 20 | 1-Aminonaphthalin-2,5,7-trisulfosäure | 1-Amino-3-ureido-6-methyl-benzol | Morpholin |
| 21 | 1-Aminonaphthalin-3,7-disulfosäure | 1-Amino-3-ureido-benzol | Morpholin |
| 22 | 2-Aminonaphthalin-4,8-disulfosäure | 1-Amino-3-ureido-6-ethoxy-benzol | Morpholin |
| 23 | 2-Aminonaphthalin-3,6-disulfosäure | 1-Amino-3-ureido-benzol | Piperidin |
| 24 | 2-Aminonaphthalin-3,6,8-trisulfosäure | 1-Amino-3-ureido-6-sulfo-benzol | Morpholin |
| 25 | 1-Aminonaphthalin-3,6,8-trisulfosäure | 1-Amino-3-ureido-benzol | Piperazin |
| 26 | 2-Aminonaphthalin-4,6,8-trisulfosäure | 1-Amino-3-ureido-6-methyl-benzol | Morpholin |
| 27 | 2-Aminonaphthalin-1,5,7-trisulfosäure | 1-Amino-3-ureido-benzol | Piperazin |
| 28 | 1-Aminonaphthalin-3,6,8-trisulfosäure | 1-Amino-3-ureido-6-methoxy-benzol | Morpholin |
| 29 | 2-Aminonaphthalin-1,5-disulfosäure | 1-Amino-3-ureido-6-methoxy-benzol | Piperidin |
| 30 | 2-Aminonaphthalin-1,5-disulfosäure | 1-Amino-3-ureido-6-methoxy-benzol | Morpholin |
| 31 | 2-Aminonaphthalin-3,6-disulfosäure | 1-Amino-3-ureido-6-methyl-benzol | Morpholin |
| 32 | 2-Aminonaphthalin-5,7-disulfosäure | 1-Amino-3-ureido-6-ethoxy-benzol | Piperazin |
| 33 | 2-Aminonaphthalin-3,6-disulfosäure | 1-Amino-3-ureido-6-ethoxy-benzol | Piperidin |
| 34 | 2-Aminonaphthalin-1,5-disulfosäure | 1-Amino-3-ureido-6-ethyl-benzol | Piperazin |
| 35 | 1-Aminonaphthalin-3,6,8-trisulfosäure | 1-Amino-3-ureido-benzol | Piperidin |
| 36 | 2-Aminonaphthalin-1,5-disulfosäure | 1-Amino-3-ureido-benzol | Piperazin |
| 37 | 2-Aminonaphthalin-4,6,8-trisulfosäure | 1-Amino-3-ureido-benzol | Morpholin |
| 38 | 2-Aminonaphthalin-1,5-disulfosäure | 1-Amino-3-ureido-6-methyl-benzol | Morpholin |
| 39 | 2-Aminonaphthalin-1,5-disulfosäure | 1-Amino-3-ureido-benzol | Piperidin |
| 40 | 1-Aminonaphthalin-3,7-disulfosäure | 1-Amino-3-ureido-6-sulfo-benzol | Piperidin |
| 41 | 2-Aminonaphthalin-4,6,8-trisulfosäure | 1-Amino-3-ureido-6-ethyl-benzol | Morpholin |
| 42 | 2-Aminonaphthalin-4,8-disulfosäure | 1-Amino-3-ureido-6-methoxy-benzol | Morpholin |
| 43 | 2-Aminonaphthalin-1,5,7-trisulfosäure | 1-Amino-3-ureido-benzol | Piperidin |
| 44 | 2-Aminonaphthalin-6,8-disulfosäure | 1-Amino-3-ureido-6-methyl-benzol | Piperazin |
| 45 | 1-Aminonaphthalin-3,7-disulfosäure | 1-Amino-3-ureido-6-ethyl-benzol | Morpholin |
| 46 | 2-Aminonaphthalin-3,6,8-trisulfosäure | 1-Amino-3-ureido-6-methyl-benzol | Morpholin |
| 47 | 2-Aminonaphthalin-6,8-disulfosäure | 1-Amino-3-ureido-benzol | Piperidin |
| 48 | 2-Aminonaphthalin-1,5-disulfosäure | 1-Amino-3-ureido-6-ethoxy-benzol | Piperidin |
| 49 | 1-Aminonaphthalin-3,6,8-trisulfosäure | 1-Amino-3-ureido-6-methyl-benzol | Piperidin |
| 50 | 2-Aminonaphthalin-4,8-disulfosäure | 1-Amino-3-ureido-6-methyl-benzol | Morpholin |
| 51 | 1-Aminonaphthalin-2,5,7-trisulfosäure | 1-Amino-3-ureido-6-ethoxy-benzol | Piperidin |

Tabelle (Fortsetzung)

| Nr. | Aminoazoverbindung aus Diazokomponente | Kupplungskomponente | Amin |
|---|---|---|---|
| 52 | 2-Aminonaphthalin-1,5-disulfosäure | 1-Amino-3-ureido-6-sulfo-benzol | Morpholin |
| 53 | 2-Aminonaphthalin-3,6,8-trisulfosäure | 1-Amino-3-ureido-6-ethyl-benzol | Morpholin |
| 54 | 2-Aminonaphthalin-4,8-disulfosäure | 1-Amino-3-ureido-6-trifluormethyl-benzol | Morpholin |
| 55 | 2-Aminonaphthalin-5,7-disulfosäure | 1-Amino-3-ureido-benzol | Morpholin |
| 56 | 1-Aminonaphthalin-3,7-disulfosäure | 1-Amino-3-ureido-benzol | Piperidin |
| 57 | 2-Aminonaphthalin-4,8-disulfosäure | 1-Amino-3-ureido-6-chlor-benzol | Piperidin |
| 58 | 1-Aminonaphthalin-2,5,7-trisulfosäure | 1-Amino-3-ureido-6-chlor-benzol | Morpholin |
| 59 | 2-Aminonaphthalin-4,8-disulfosäure | 1-Amino-3-ureido-6-ethoxy-benzol | Piperidin |
| 60 | 2-Aminonaphthalin-4,8-disulfosäure | 1-Amino-3-ureido-benzol | Morpholin |
| 61 | 2-Aminonaphthalin-3,6,8-trisulfosäure | 1-Amino-3-ureido-6-trifluormethyl-benzol | Morpholin |
| 62 | 2-Aminonaphthalin-3,6,8-trisulfosäure | 1-Amino-3-ureido-6-methoxy-benzol | Morpholin |
| 63 | 2-Aminonaphthalin-3,6-disulfosäure | 1-Amino-3-ureido-benzol | Morpholin |
| 64 | 2-Aminonaphthalin-3,6,8-trisulfosäure | 1-Amino-3-ureido-6-ethoxy-benzol | Morpholin |
| 65 | 1-Aminonaphthalin-3,6-disulfosäure | 1-Amino-3-ureido-benzol | Morpholin |
| 66 | 2-Aminonaphthalin-6,8-disulfosäure | 1-Amino-3-ureido-benzol | Morpholin |
| 67 | 2-Aminonaphthalin-3,6,8-trisulfosäure | 1-Amino-3-ureido-benzol | Piperazin |
| 68 | 2-Aminonaphthalin-4,8-disulfosäure | 1-Amino-3-ureido-6-ethoxy-benzol | Piperazin |
| 69 | 2-Aminonaphthalin-3,6,8-trisulfosäure | 1-Amino-3-ureido-6-ethyl-benzol | Piperidin |
| 70 | 2-Aminonaphthalin-3,6,8-trisulfosäure | 1-Amino-3-ureido-benzol | Piperidin |
| 71 | 1-Aminonaphthalin-2,5,7-trisulfosäure | 1-Amino-3-ureido-benzol | Piperidin |
| 72 | 1-Aminonaphthalin-2,5,7-trisulfosäure | 1-Amino-3-ureido-benzol | Morpholin |
| 73 | 2-Aminonaphthalin-4,8-disulfosäure | 1-Amino-3-ureido-benzol | Piperazin |
| 74 | 2-Aminonaphthalin-1,5,7-trisulfosäure | 1-Amino-3-ureido-6-chlor-benzol | Piperazin |
| 75 | 2-Aminonaphthalin-1,5,7-trisulfosäure | 1-Amino-3-ureido-6-chlor-benzol | Morpholin |
| 76 | 2-Aminonaphthalin-3,6,8-trisulfosäure | 1-Amino-3-ureido-6-methyl-benzol | Piperazin |
| 77 | 1-Aminonaphthalin-3,7-disulfosäure | 1-Amino-3-ureido-6-methoxy-benzol | Morpholin |
| 78 | 2-Aminonaphthalin-1,5-disulfosäure | 1-Amino-3-ureido-6-chlor-benzol | Piperazin |
| 79 | 2-Aminonaphthalin-1,5-disulfosäure | 1-Amino-3-ureido-6-trifluormethyl-benzol | Morpholin |
| 80 | 2-Aminonaphthalin-3,6-disulfosäure | 1-Amino-3-ureido-6-trifluormethyl-benzol | Morpholin |
| 81 | 2-Aminonaphthalin-3,6,8-trisulfosäure | 1-Amino-3-ureido-6-sulfo-benzol | Piperidin |
| 82 | 2-Aminonaphthalin-1,5,7-trisulfosäure | 1-Amino-3-ureido-6-trifluormethyl-benzol | Morpholin |
| 83 | 2-Aminonaphthalin-4,8-disulfosäure | 1-Amino-3-ureido-6-trifluormethyl-benzol | Piperazin |
| 84 | 2-Aminonaphthalin-1,5,7-trisulfosäure | 1-Amino-3-ureido-benzol | Morpholin |
| 85 | 1-Aminonaphthalin-3,7-disulfosäure | 1-Amino-3-ureido-6-methyl-benzol | Morpholin |
| 86 | 2-Aminonaphthalin-3,6,8-trisulfosäure | 1-Amino-3-ureido-6-chlor-benzol | Piperidin |
| 87 | 2-Aminonaphthalin-4,8-disulfosäure | 1-Amino-3-ureido-6-sulfo-benzol | Piperidin |
| 88 | 1-Aminonaphthalin-3,6,8-trisulfosäure | 1-Amino-3-ureido-6-chlor-benzol | Morpholin |
| 89 | 2-Aminonaphthalin-4,6,8-trisulfosäure | 1-Amino-3-ureido-6-methyl-benzol | Piperazin |
| 90 | 1-Aminonaphthalin-3,6,8-trisulfosäure | 1-Amino-3-ureido-benzol | Morpholin |
| 91 | 2-Aminonaphthalin-4,6,8-trisulfosäure | 1-Amino-3-ureido-6-trifluormethyl-benzol | Morpholin |
| 92 | 2-Aminonaphthalin-5,7-disulfosäure | 1-Amino-3-ureido-6-methoxy-benzol | Piperidin |
| 93 | 2-Aminonaphthalin-4,6,8-trisulfosäure | 1-Amino-3-ureido-benzol | Piperazin |
| 94 | 2-Aminonaphthalin-1,5-disulfosäure | 1-Amino-3-ureido-benzol | Morpholin |
| 95 | 1-Aminonaphthalin-3,6-disulfosäure | 1-Amino-3-ureido-6-sulfo-benzol | Piperidin |
| 96 | 2-Aminonaphthalin-4,6,8-trisulfosäure | 1-Amino-3-ureido-6-methoxy-benzol | Morpholin |
| 97 | 2-Aminonaphthalin-1,5,7-trisulfosäure | 1-Amino-3-ureido-6-ethyl-benzol | Morpholin |
| 98 | 2-Aminonaphthalin-3,6,8-trisulfosäure | 1-Amino-3-ureido-6-chlor-benzol | Piperazin |
| 99 | 1-Aminonaphthalin-3,6-disulfosäure | 1-Amino-3-ureido-6-methyl-benzol | Morpholin |
| 100 | 2-Aminonaphthalin-4,8-disulfosäure | 1-Amino-3-ureido-6-chlor-benzol | Morpholin |

Tabelle (Fortsetzung)

| Nr. | Aminoazoverbindung aus Diazokomponente | Kupplungskomponente | Amin |
|---|---|---|---|
| 101 | 1-Aminonaphthalin-2,5,7-trisulfosäure | 1-Amino-3-ureido-6-methoxy-benzol | Piperazin |

Färbevorschrift 1

2 Teile des gemäss Beispiel 1 erhaltenen Farbstoffes werden unter Zusatz von 5 bis 20 Teilen Harnstoff und 2 Teilen kalzinierter Soda in 100 Teilen Wasser bei 20 bis 50°C gelöst. Mit der erhaltenen Lösung wird ein Baumwollgewebe imprägniert, so dass es um 60 bis 80% seines Gewichtes zunimmt, und dann getrocknet. Danach wird während 1 1/2 bis 5 Minuten bei 140 bis 210°C thermofixiert, dann während einer Viertelstunde in einer 0,1%igen kochenden Lösung eines ionenfreien Waschmittels geseift, gespült und getrocknet.

Färbevorschrift 2

2 Teile des gemäss Beispiel 1 erhaltenen Farbstoffes werden in 2000 Teilen Wasser unter Zusatz von 120 Teilen Kochsalz oder kalziniertem Glaubersalz bei 75°C gelöst. Man geht mit 100 Teilen eines Baumwollgewebes in dieses Färbebad ein und hält die Temperatur während 30 bis 60 Minuten konstant. Danach werden 10 Teile kalzinierter Soda und 4 ml Natronlauge (36°Bé) zugegen. Die Temperatur wird weitere 45 bis 60 Minuten bei 75 bis 80°C gehalten, dann wird während 15 Minuten in einer 0,1%igen kochenden Lösung eines ionenfreien Waschmittels geseift, gespült und getrocknet.

Färbevorschrift 3

2 Teile des gemäss Beispiel 1 erhaltenen Farbstoffes werden unter Zusatz von 0,5 Teilen m-nitrobenzolsulfonsaurem Natrium in 100 Teile Wasser gelöst. Mit der erhaltenen Lösung wird ein Baumwollgewebe imprägniert, so dass es um 75% seines Gewichtes zunimmt, und dann getrocknet. Danach imprägniert man das Gewebe mit einer 20°C warmen Lösung, die pro Liter 5 g Natriumhydroxid und 300 g Natriumchlorid enthält, quetscht auf 75% Gewichtszunahme ab, dämpft die Färbung während 30 Sekunden bei 100 bis 101°C, spült, seift während einer Viertelstunde in einer 0,3%igen kochenden Lösung eines ionenfreien Waschmittels, spült und trocknet.

Färbevorschrift 4

2 Teile des gemäss Beispiel 1 erhaltenen Farbstoffes werden in 100 Teilen Wasser gelöst. Die Lösung gibt man zu 1900 Teilen kaltem Wasser, fügt 60 Teile Natriumchlorid zu und geht mit 100 Teilen eines Baumwollgewebes in dieses Färbebad ein. Man steigert die Temperatur auf 60°C, wobei nach 30 Minuten 40 Teile kalzinierte Soda und nochmals 60 Teile Natriumchlorid zugegeben werden. Man hält die Temperatur 30 Minuten auf 60°C, spült und seift dann die Färbung während 15 Minuten in einer 0,3%igen kochenden Lösung eines ionenfreien Waschmittels, spült und trocknet.

Druckvorschrift

2 Teile des gemäss Beispiel 1 hergestellten Farbstoffes werden unter schnellem Rühren in 100 Teile einer Stammverdickung, enthaltend 45 Teile 5%ige Natriumalginatverdickung, 32 Teile Wasser, 20 Teile Harnstoff, 1 Teil m-nitrobenzolsulfonsaures Natrium sowie 2 Teile Natriumcarbonat, eingestreut. Mit der so erhaltenen Druckpaste bedruckt man ein Baumwollgewebe auf einer Rouleauxdruckmaschine und dämpft den erhaltenen bedruckten Stoff 4 bis 8 Minuten bei 100°C in gesättigtem Dampf. Das bedruckte Gewebe wird dann in kaltem und heissem Wasser gründlich gespült, wobei sich die nicht chemisch fixierten Anteile sehr leicht von der Faser entfernen lassen, und anschliessend getrocknet.

**Patentansprüche**

1. Reaktivfarbstoffe der Formel

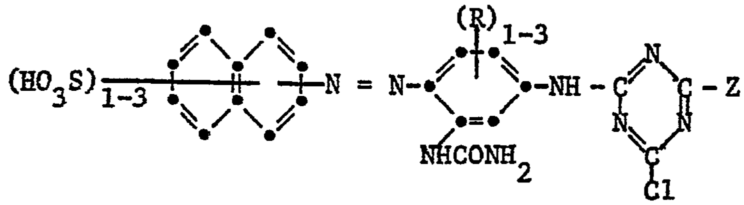

(1) ,

worin R für 1 bis 3 Substituenten aus der Gruppe Wasserstoff, Halogen, Nitro, Cyan, Trifluormethyl, Sulfamoyl, Carbamoyl, $C_{1-4}$-Alkyl, $C_{1-4}$-Alkoxy, Amino, Acetylamino, Ureido, Hydroxy, Carboxy, Sulfomethyl und Sulfo unabhängig voneinander, steht; und Z Morpholino, Piperidino oder Piperazino ist.

2. Reaktivfarbstoffe gemäss Anspruch 1, worin der Naphthalinrest Di- oder Trisulfonaphthyl-(2) ist.

3. Reaktivfarbstoffe gemäss Anspruch 2, der Formel

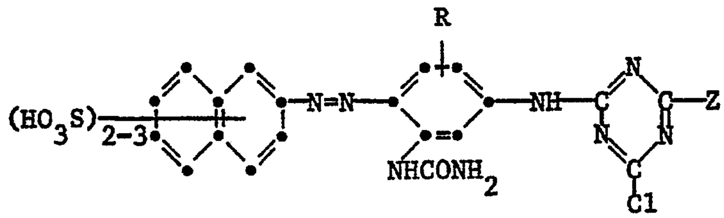

(2)

worin R Wasserstoff, Halogen, Trifluormethyl, $C_{1-4}$-Alkyl, $C_{1-4}$-Alkoxy, Carboxy oder Sulfo; und Z Morpholino, Piperidino oder Piperazino ist.

4. Reaktivfarbstoffe gemäss Anspruch 3, worin R Wasserstoff, Halogen, $C_{1-4}$-Alkyl oder $C_{1-4}$-Alkoxy ist.

5. Reaktivfarbstoffe gemäss Anspruch 4, worin R Wasserstoff ist.

6. Reaktivfarbstoffe gemäss Anspruch 5, worin Z Morpholino ist.

7. Reaktivfarbstoff gemäss Anspruch 6, der Formel

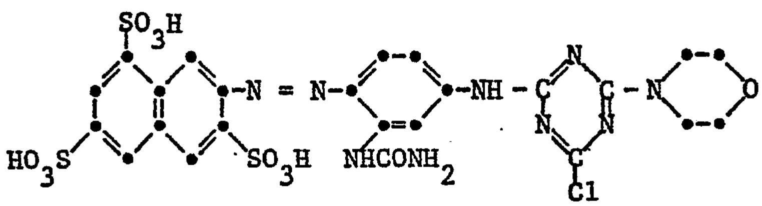

(3).

8. Verfahren zur Herstellung von Reaktivfarbstoffen der Formel (1) gemäss Anspruch 1, dadurch gekennzeichnet, dass man eine diazotierte Diazokomponente der Formel

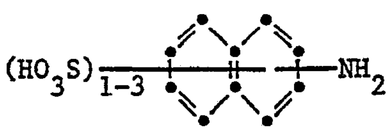

(4) ,

auf eine Kupplungskomponente der Formel

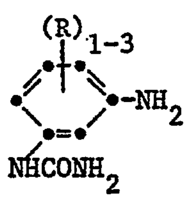

(5) ,

kuppelt, und die so erhaltene Aminomonoazo-Verbindung und ein Amin der Formel

$$H - Z \qquad (6)$$

mit 2,4,6-Trichlor-s-triazin kondensiert.

9. Verwendung der Reaktivfarbstoffe gemäss Anspruch 1 zum Färben oder Bedrucken von textilen Fasermaterialien.

10. Verwendung gemäss Anspruch 9, zum Bedrucken von Baumwolle.

## Claims

1. A reactive dye of the formula

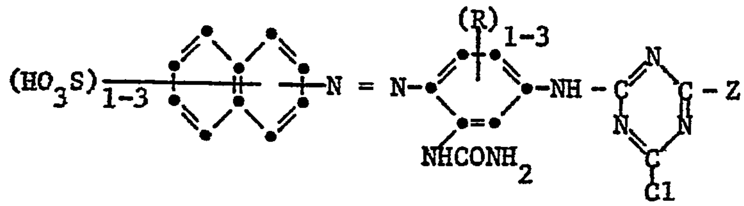

(1)

wherein R is 1 to 3 substituents selected from the group consisting of hydrogen, halogen, nitro, cyano, trifluoromethyl, sulfamoyl, carbamoyl, $C_1$–$C_4$alkyl, $C_1$–$C_4$alkoxy, amino, acetylamino, ureido, hydroxyl, carboxyl, sulfomethyl and sulfo, independently of one another; and Z is morpholino, piperidino or piperazino.

2. A reactive dye according to claim 1, wherein the naphthalene radical is disulfonaphth-2-yl or trisulfonaphth-2-yl.

3. A reactive dye according to claim 2 of the formula

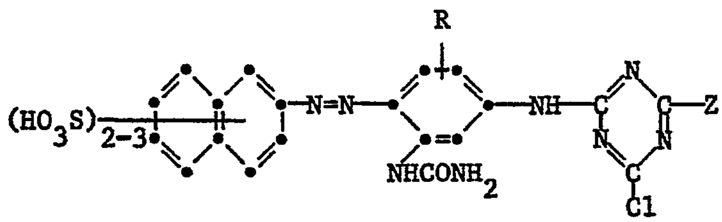

(2)

wherein R is hydrogen, halogen, trifluoromethyl, $C_1$–$C_4$alkyl, $C_1$–$C_4$alkoxy, carboxyl, or sulfo; and Z is morpholino, piperidino or piperazino.

4. A reactive dye according to claim 3, wherein R is hydrogen, halogen, $C_1$–$C_4$alkyl or $C_1$–$C_4$alkoxy.

5. A reactive dye according to claim 4, wherein R is hydrogen.

6. A reactive dye according to claim 5, wherein Z is morpholino.

7. A reactive dye according to claim 6 of the formula

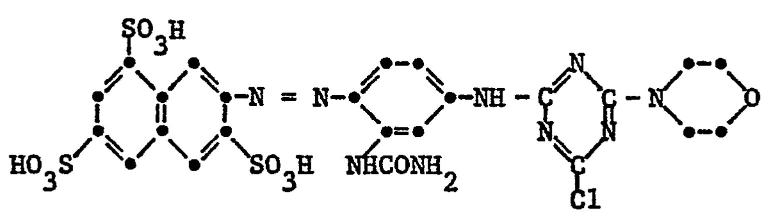

(3)

8. A process for the preparation of a reactive dye of formula (1) according to claim 1, which process comprises coupling a diazotised diazo component of the formula

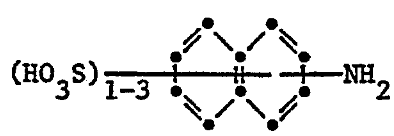

(4)

with a coupling component of the formula

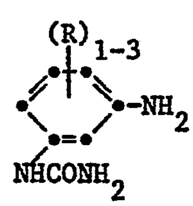

(5)

and condensing the aminomonoazo compound thus obtained and an amine of the formula

H - Z (6)

with 2,4,6-trichloro-s-triazine.

9. The use of a reactive dye according to claim 1 for dyeing or printing textile fibre materials.

10. The use according to claim 9 for printing cotton.

## Revendications

1. Colorants réactifs de formule

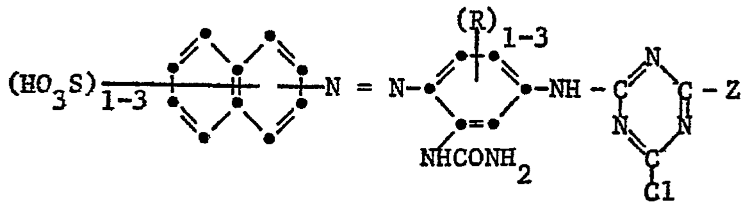

(1) ,

dans laquelle R représente, indépendamment l'un de l'autre, 1 à 3 substituants choisis parmi: hydrogène, halogène, nitro, cyano, trifluorométhyle, sulfamoyle, carbamoyle, $C_1$–$C_4$-alkyle, $C_1$–$C_4$-alkoxy, amino, acétylamino, uréido, hydroxy, carboxy, sulfométhyle et sulfo; et Z est morpholino, pipéridino ou pipérazino.

2. Colorants réactifs selon la revendication 1, dans lesquels le reste naphtalène est di – ou trisulfonaphtyle – (2).

3. Colorants réactifs selon la revendication 2, de formule

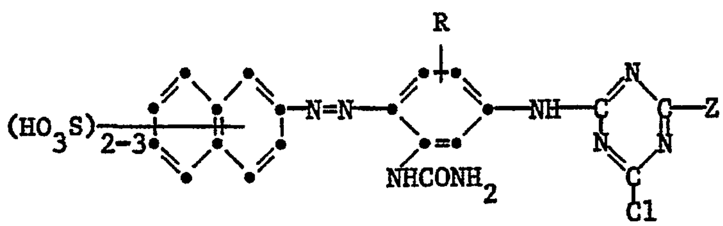

(2)

dans laquelle R est hydrogène, halogène, trifluorométhyle, $C_1$–$C_4$-alkyle, $C_1$–$C_4$-alkoxy, carboxy ou sulfo; et Z est morpholino, pipéridino ou pipérazino.

4. Colorants réactifs selon la revendication 3, où R est hydrogène, halogène, $C_1$–$C_4$-alkyle ou $C_1$–$C_4$-alkoxy.

5. Colorants réactifs selon la revendication 4, où R est hydrogène.

6. Colorants réactifs selon la revendication 5, où Z est morpholino.

7. Colorants réactifs selon la revendication 6, de formule

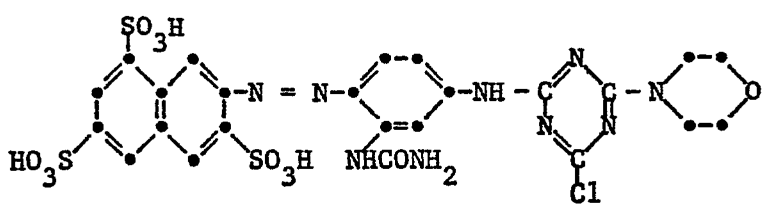

(3)

8. Procédé de fabrication de colorants réactifs de formule (1), conformes à la revendication 1, caractérisé en ce qu'on effectue une copulation d'un composant diazo diazoté de formule

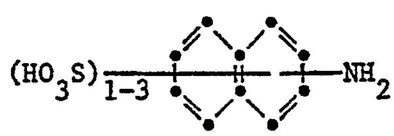

(4) ,

sur un copulant de formule

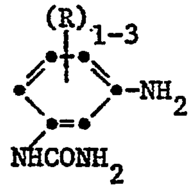

(5) ,

et que l'on condense le composé aminomonoazoïque ainsi obtenu ainsi qu'une amine de formule

$$H - Z \qquad (6)$$

avec la 2,4,6-trichloro-s-triazine.

9. Utilisation des colorants réactifs selon la revendication 1 pour la teinture ou l'impression des matériaux en fibres textiles.

10. Utilisation selon la revendication 9, pour l'impression du coton.